(19) Europäisches Patentamt
European Patent Office
Office européen des brevets

(11) **EP 3 401 363 B1**

(12) **EUROPEAN PATENT SPECIFICATION**

(45) Date of publication and mention
of the grant of the patent:
**04.03.2020 Bulletin 2020/10**

(51) Int Cl.:
*C08L 23/22* (2006.01)     *B60C 1/00* (2006.01)
*C08K 3/04* (2006.01)     *B29D 30/06* (2006.01)

(21) Application number: **18170026.1**

(22) Date of filing: **30.04.2018**

(54) **RUBBER COMPOSITION, VULCANIZATION BLADDER, AND PNEUMATIC TIRE**

KAUTSCHUKZUSAMMENSETZUNG, VULKANISIERUNGSBLASE UND LUFTREIFEN

COMPOSITION DE CAOUTCHOUC, POCHE DE VULCANISATION ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2017 JP 2017092345**

(43) Date of publication of application:
**14.11.2018 Bulletin 2018/46**

(73) Proprietor: **Sumitomo Rubber Industries, Ltd.
Kobe-shi, Hyogo 651-0072 (JP)**

(72) Inventor: **MIYAZAKI, Tatsuya
Hyogo 651-0072 (JP)**

(74) Representative: **TBK
Bavariaring 4-6
80336 München (DE)**

(56) References cited:
**EP-A2- 2 003 164          WO-A1-2017/038527
CN-B- 102 993 577          US-A- 5 538 218
US-A- 6 013 218            US-A1- 2004 113 318
US-A1- 2006 125 146        US-A1- 2015 119 495**

• **Imerys: "Speciality Carbons for Polymer
Compounds", , 1 January 2014 (2014-01-01),
pages 1-24, XP055510717, Retrieved from the
Internet:
URL:http://www.imerys-graphite-and-carbon.
com/wordpress/wp-app/uploads/2014/04/Polym
er_compounds1.pdf [retrieved on 2018-09-27]**

**Description**

BACKGROUND OF THE INVENTION

Field of the Invention

The present invention relates to a rubber composition, a vulcanization bladder, and a pneumatic tire.

Description of the Background Art

A vulcanization bladder is used at the time of vulcanization molding of a tire. The vulcanization bladder is placed inside a green tire, and the green tire is pressed from the inner side toward a vulcanization mold by filling the vulcanization bladder with a high-pressure heating medium, whereby vulcanization molding of a tire is performed.

Water vapor, nitrogen gas, or the like is used as the heating medium. The vulcanization bladder is filled with these heating media under high pressure at a high temperature condition of 180 to 240°C, and a tire is taken out from the mold and the vulcanization bladder. This process is repeated. Thus, a rubber composition forming the vulcanization bladder is required to achieve good durability. In addition, at the same time, in order to transmit heat by the heating medium to a green tire (raw cover) to be vulcanized, the rubber composition forming the vulcanization bladder is also required to achieve good thermal conductivity.

Also, a tire rubber composition is required to achieve good thermal conductivity, in order to diffuse heat generated during running. In addition, the tire rubber composition is required to achieve good durability, since, during tire running, the temperature of the tire becomes high and force such as expansion/contraction and tension is further applied to the tire.

As described above, the rubber compositions are required to achieve both good thermal conductivity and good durability. Japanese Laid-Open Patent Publication No. 2012-224720 indicates that the speed of heat transmission to a tire in a vulcanization step is increased by using a vulcanization bladder rubber composition containing carbon fibers having good thermal conductivity, so that the time taken for vulcanization of one tire can be shortened. However, there is room for improvement in achieving both good thermal conductivity and good durability.

SUMMARY OF THE INVENTION

The present invention has been made to solve the aforementioned problem, and an object of the present invention is to provide a rubber composition that can achieve both good thermal conductivity and good durability, and a vulcanization bladder and a pneumatic tire produced by using the rubber composition.

The present invention is directed to a rubber composition containing 50 parts by mass or greater of a filler containing a graphite having a nitrogen adsorption specific surface area of not less than 16 $m^2/g$ and a bulk density of not less than 0.10 $g/cm^3$, per 100 parts by mass of a rubber component, the rubber composition having a thermal conductivity of not less than 0.45 W/m·K.

The filler is preferably contained in an amount of 60 to 75 parts by mass per 100 parts by mass of the rubber component.

Normal carbon black is preferably contained as a part of the filler in an amount of not less than 10 parts by mass per 100 parts by mass of the rubber component.

The rubber composition preferably contains a resin.

Normal carbon black is preferably contained as a part of the filler in an amount of not less than 20 parts by mass per 100 parts by mass of the rubber component.

The rubber composition is preferably a vulcanization bladder rubber composition, an inner liner rubber composition, a side reinforcing layer rubber composition, or a bead filler rubber composition.

The present invention is also directed to a vulcanization bladder produced by using the rubber composition.

The present invention is also directed to a pneumatic tire including a tire member produced by using the rubber composition.

The tire member is preferably an inner liner, a side reinforcing layer, or a bead filler.

According to the present invention, since the rubber composition contains 50 parts by mass or greater of a filler containing a graphite having a nitrogen adsorption specific surface area of not less than 16 $m^2/g$ and a bulk density of not less than 0.10 $g/cm^3$, per 100 parts by mass of a rubber component, and has a thermal conductivity of not less than 0.45 W/m·K, both good thermal conductivity and good durability can be achieved, and a vulcanization bladder and a pneumatic tire that have both good thermal conductivity and good durability can be provided.

BRIEF DESCRIPTION OF THE DRAWINGS

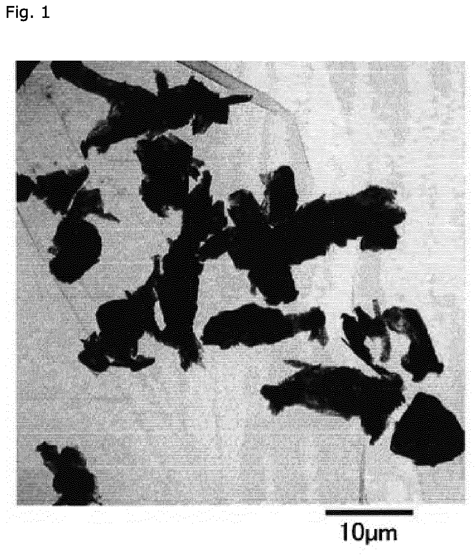

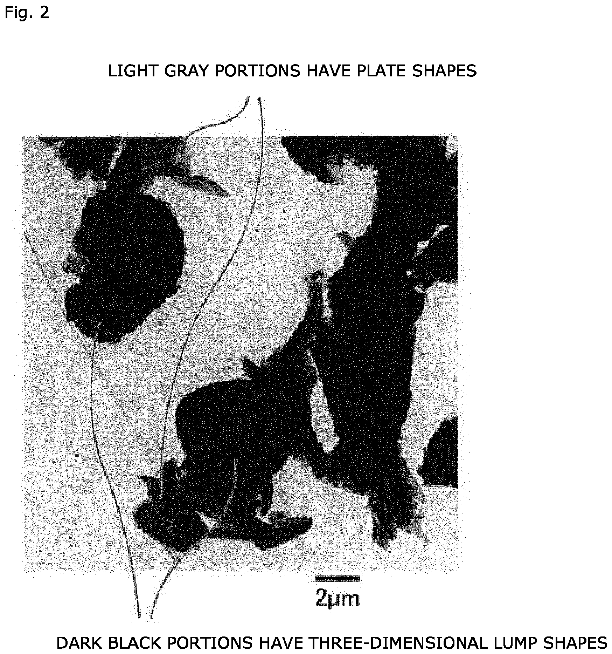

FIG. 1 is a scanning electron micrograph showing an example of a graphite specified in the present application; and FIG. 2 is a scanning electron micrograph (different in scale from FIG. 1) showing the example of the graphite specified in the present application.

DESCRIPTION OF THE PREFERRED EMBODIMENTS

The rubber composition of the present invention contains 50 parts by mass or greater of a filler containing a graphite having a nitrogen adsorption specific surface area of not less than 16 $m^2$/g and a bulk density of not less than 0.10 g/$cm^3$, per 100 parts by mass of a rubber component, and has a thermal conductivity of not less than 0.45 W/m·K, and thus a vulcanization bladder and a pneumatic tire that have both good thermal conductivity and good durability are obtained therefrom.

In the present invention, it is inferred that good thermal conductivity is achieved by including a specific graphite, and good durability is also achieved by including the filler containing the specific graphite in a specific amount or greater, so that both good thermal conductivity and good durability can be achieved.

As a result of a study, the present inventor has found that sufficient thermal conductivity cannot be achieved with a graphite that has been included in a conventional inner liner rubber composition. The present inventor has thoroughly studied this and found that sufficient thermal conductivity in a thickness direction cannot be achieved with the conventionally used graphite and thus a rubber composition cannot have a sufficient thermal conductivity. On the other hand, in the present invention, it is inferred that since a graphite having a specific nitrogen adsorption specific surface area and a specific bulk density is used, good thermal conductivity in a thickness direction can be achieved, so that a rubber composition can have good thermal conductivity.

Furthermore, in recent years, a technique to shorten the time taken for vulcanization of one tire, thereby improving the efficiency of vulcanization production has been proposed. For example, Japanese Laid-Open Patent Publication No. 2012-224720 indicates that the speed of heat transmission to a tire in a vulcanization step is increased by using a vulcanization bladder rubber composition containing carbon fibers having good thermal conductivity, so that the time taken for vulcanization of one tire can be shortened. However, in a vulcanization bladder which is a balloon-like object, it is difficult to orient fibers and the like in a direction in which heat is desired to be transmitted, that is, in the thickness direction. Thus, there is room for improvement in that the effect of improving the efficiency of vulcanization production has not been sufficiently exerted. On the other hand, according to the present invention, by using the rubber composition of the present invention as a vulcanization bladder rubber composition, a vulcanization bladder that has both good thermal conductivity and good durability and that has excellent efficiency of vulcanization production can be provided.

In addition, the obtained vulcanization bladder has a high thermal conductivity and thus can immediately transmit the heat of steam filling the vulcanization bladder to a green tire (raw cover). Accordingly, similar to the case where a raw cover is made thin, a sufficient amount of vulcanization can be quickly ensured even in a vulcanization rate limited portion. Thus, even when application of tightening pressure by a vulcanization press is turned off early, that is, even when vulcanization is performed in a short time, the effect that occurrence of pores is inhibited is obtained.

In the present invention, by combining the graphite specified in the present application together with later-described normal carbon black as necessary, both good thermal conductivity and good durability can be achieved. Thus, the rubber composition of the present invention can be suitably used for not only a vulcanization bladder but also tire members (particularly, a tire internal member). Here, the tire internal member means a member that does not form a tire outer surface, such as an inner liner, a side reinforcing layer (insert), and a bead filler.

<Filler>

The filler used in the present invention contains a graphite having a nitrogen adsorption specific surface area of not less than 16 $m^2$/g and a bulk density of not less than 0.10 g/$cm^3$, and the total amount thereof (the total amount of the entire filler, preferably the total amount of the graphite specified in the present application, normal carbon black, and conductive carbon) is not less than 50 parts by mass per 100 parts by mass of the rubber component. Accordingly, both good thermal conductivity and good durability can be achieved.

The amount of the filler (the total amount of the entire filler, preferably the total amount of the graphite specified in the present application, the normal carbon black, and the conductive carbon) per 100 parts by mass of the rubber component is preferably not less than 60 parts by mass for the reason that both good thermal conductivity and good durability can be achieved, and is preferably not greater than 100 parts by mass, more preferably not greater than 90 parts by mass, and further preferably not greater than 75 parts by mass for the reason that good durability is achieved.

<<Graphite>>

In the present invention, a graphite having a nitrogen adsorption specific surface area of not less than 16 $m^2$/g and a bulk density of not less than 0.10 $g/cm^3$ is used as the filler. In the present invention, the above graphite only needs to be used as a raw material when a rubber composition is produced, and the structure of the graphite may change during kneading, extrusion, or the like such that the above nitrogen adsorption specific surface area and the above bulk density are not satisfied.

FIGS. 1 and 2 show scanning electron micrographs showing an example of the graphite specified in the present application.

In the present specification, graphite is an elemental mineral (crystal) composed of carbon referred to as black lead or plumbago, is not limited to a naturally-occurring one, and includes an artificially-produced one.

The nitrogen adsorption specific surface area ($N_2SA$) of the graphite is not less than 16 $m^2$/g, preferably not less than 18 $m^2$/g, and more preferably not less than 20 $m^2$/g. When the $N_2SA$ is not less than 16 $m^2$/g, both good thermal conductivity and good durability can be achieved. Meanwhile, the upper limit of the $N_2SA$ is not particularly limited, but the $N_2SA$ is preferably not greater than 50 $m^2$/g, more preferably not greater than 40 $m^2$/g, and further preferably not greater than 28 $m^2$/g, for the reason that a decrease in elongation at break due to autoagglutination can be inhibited and good durability is achieved.

In the present specification, the nitrogen adsorption specific surface area of the graphite is measured according to JIS K 6217-2: 2001.

The bulk density (untamped) of the graphite is not less than 0.10 $g/cm^3$, preferably not less than 0.12 $g/cm^3$, and more preferably not less than 0.14 $g/cm^3$. When the bulk density (untamped) is not less than 0.10 $g/cm^3$, both good thermal conductivity and good durability can be achieved. Meanwhile, the upper limit of the bulk density (untamped) is not particularly limited, but the bulk density (untamped) is preferably not greater than 0.50 $g/cm^3$, more preferably not greater than 0.40 $g/cm^3$, further preferably not greater than 0.38 $g/cm^3$, and particularly preferably not greater than 0.34 $g/cm^3$, for the reason that the graphite is easily dispersed during kneading and the advantageous effects of the present invention are more suitably obtained.

In the present specification, the bulk density (untamped) of the graphite is measured according to JIS H 1902.

For the reason that a fracture nucleus can be prevented from being formed and better durability is achieved, the maximum particle diameter of the graphite is preferably not greater than 40 $\mu$m and more preferably not greater than 38 $\mu$m. The lower limit of the maximum particle diameter is not particularly limited, but the maximum particle diameter is preferably not less than 0.1 $\mu$m and more preferably not less than 0.2 $\mu$m. Accordingly, good dispersibility in the rubber composition can be achieved, and better durability can be achieved.

In the present specification, the maximum particle diameter is the maximum length of the graphite when the graphite is observed with a transmission electron microscope (TEM) and the graphite is projected on a projection plane while the direction of the graphite relative to the projection plane is variously changed. For example, the maximum particle diameter is the length of a longer diagonal line in the case of a rhombic shape, and is a diameter in the case of a disc shape. The maximum particle diameter is measured with the transmission electron microscope (TEM).

As the graphite specified in the present application, for example, products of Imerys, etc. can be used.

In the present invention, the graphite specified in the present application may be used individually, or two or more types may be used in combination. In addition, the graphite specified in the present application may be used in combination with a graphite other than the graphite specified in the present application.

The amount of the graphite specified in the present application per 100 parts by mass of the rubber component is preferably not less than 5 parts by mass, more preferably not less than 8 parts by mass, further preferably not less than 10 parts by mass, and particularly preferably not less than 12 parts by mass, and is preferably not greater than 40 parts by mass, more preferably not greater than 30 parts by mass, further preferably not greater than 25 parts by mass, and particularly preferably not greater than 20 parts by mass. When the amount is within the above range, both good thermal conductivity and good durability can be more suitably achieved.

Here, the amount of the graphite specified in the present application means an amount blended as a raw material when a rubber composition is produced.

As the filler, carbon black is preferably used in addition to the graphite specified in the present application.

By combining the graphite specified in the present application together with carbon black, a better thermal conductivity is achieved. This effect is inferred to be brought about by the graphite specified in the present application serving to mediate heat transmission between carbon black particles. In addition, by combining the graphite specified in the present application together with carbon black, better durability is achieved. In particular, by combining the graphite specified in the present application together with normal carbon black, good reinforcement is achieved and better durability is achieved.

For the reason that good reinforcement, crack growth resistance, M300, and elongation at break are achieved, the amount of the normal carbon black per 100 parts by mass of the rubber component is preferably not less than 10 parts by mass, more preferably not less than 15 parts by mass, and further preferably not less than 20 parts by mass.

In the present invention, the graphite specified in the present application is preferably combined together with normal carbon black or conductive carbon, is more preferably combined together with normal carbon black, and is further preferably combined together with normal carbon black and conductive carbon.

For the reason that both good thermal conductivity and good durability can be more suitably achieved, preferably, the graphite specified in the present application is contained in an amount of 10 to 20 parts by mass, normal carbon black is contained in an amount of 10 to 50 parts by mass, and the conductive carbon is contained in an amount of 20 to 40 parts by mass, per 100 parts by mass of the rubber component.

«Normal Carbon Black»

By combining the graphite specified in the present application together with normal carbon black, good reinforcement and crack growth resistance are achieved and both good thermal conductivity and good durability can be more suitably achieved. Normal carbon black means carbon black other than conductive carbon described later. Examples of usable normal carbon black include, but are not particularly limited to, N134, N110, N220, N234, N219, N339, N330, N326, N351, N550, and N762. These carbon blacks may be used individually, or two or more thereof may be used in combination. For the reason that good reinforcement and crack growth resistance are achieved, N220, N234, N219, N339, N330, N326, and N351 are preferable.

For the reason that good reinforcement and crack growth resistance are achieved, the nitrogen adsorption specific surface area ($N_2SA$) of the normal carbon black is preferably not less than 20 $m^2/g$ and more preferably not less than 50 $m^2/g$. In addition, for the reason that good dispersibility in the rubber composition is achieved and good durability is achieved, the nitrogen adsorption specific surface area ($N_2SA$) of the normal carbon black is preferably not greater than 200 $m^2/g$, more preferably not greater than 150 $m^2/g$, and further preferably not greater than 100 $m^2/g$.

In the present specification, the nitrogen adsorption specific surface area of the carbon black is measured according to JIS K 6217-2: 2001.

For the reason that good reinforcement and crack growth resistance are achieved, the DBP absorption of the normal carbon black is preferably not less than 50 $cm^3/100$ g and more preferably not less than 90 $cm^3/100$ g. For the reason that good dispersibility in the rubber composition is achieved and good durability is achieved, the DBP absorption of the normal carbon black is preferably not greater than 200 $cm^3/100$ g and more preferably not greater than 150 $cm^3/100$ g.

In the present specification, the DBP absorption of the carbon black is measured according to JIS K6217-4: 2001.

As the normal carbon black, for example, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

In the case where normal carbon black is contained, the amount of the normal carbon black per 100 parts by mass of the rubber component is preferably not less than 10 parts by mass, more preferably not less than 15 parts by mass, and further preferably not less than 20 parts by mass for the reason that good reinforcement, crack growth resistance, and M300 are achieved, and is preferably not greater than 60 parts by mass, more preferably not greater than 50 parts by mass, further preferably not greater than 40 parts by mass, and particularly preferably not greater than 35 parts by mass for the reason that the thermal conductivity in the rubber composition can be better.

«Conductive Carbon»

By combining the graphite specified in the present application together with conductive carbon, the blending cost is low and also both good thermal conductivity and good durability can be more suitably achieved.

Examples of the conductive carbon include Ketchen black and acetylene black. These conductive carbons may be used individually, or two or more thereof may be used in combination. Among them, acetylene black is preferable for the reason that good reinforcement and good thermal conductivity are achieved.

For the reason that good reinforcement and crack growth resistance are achieved, the nitrogen adsorption specific surface area ($N_2SA$) of the conductive carbon is preferably not less than 5 $m^2/g$, more preferably not less than 50 $m^2/g$, and further preferably 70 $m^2/g$. For the reason that good dispersibility in the rubber composition is achieved and good durability is achieved, the nitrogen adsorption specific surface area ($N_2SA$) of the conductive carbon is preferably not greater than 200 $m^2/g$, more preferably not greater than 150 $m^2/g$, and further preferably not greater than 100 $m^2/g$.

For the reason that good reinforcement and crack growth resistance are achieved, the DBP absorption of the conductive carbon is preferably not less than 50 $cm^3/100$ g, more preferably not less than 90 $cm^3/100$ g, and further preferably not less than 130 $cm^3/100$ g. For the reason that good dispersibility in the rubber composition is achieved and good thermal conduction is achieved, the DBP absorption of the conductive carbon is preferably not greater than 250 $cm^3/100$ g and more preferably not greater than 180 $cm^3/100$ g.

As the conductive carbon, for example, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., Imerys, etc. can be used.

In the case where the conductive carbon is contained, the amount of the conductive carbon per 100 parts by mass of the rubber component is preferably not less than 5 parts by mass, more preferably not less than 10 parts by mass, further preferably not less than 15 parts by mass, and particularly preferably not less than 20 parts by mass for the reason that good thermal conductivity is achieved, and is preferably not greater than 60 parts by mass, more preferably not greater than 50 parts by mass, further preferably not greater than 40 parts by mass, and particularly preferably not greater than 30 parts by mass for the reason that good dispersibility in the rubber composition is achieved, the blending viscosity is appropriate, and good durability is achieved.

«Silica»

Silica may be used as the filler.

The silica is not particularly limited, and, for example, dry-process silica (anhydrous silica), wet-process silica (hydrous silica), and the like can be used. Wet-process silica (hydrous silica) is preferable since it has a higher silanol group content.

The nitrogen adsorption specific surface area ($N_2SA$) of the silica is preferably not less than 80 $m^2/g$, more preferably not less than 115 $m^2/g$, and further preferably not less than 150 $m^2/g$, and is preferably not greater than 400 $m^2/g$, more preferably not greater than 200 $m^2/g$, and further preferably not greater than 180 $m^2/g$. Accordingly, the advantageous effects of the present invention are more suitably obtained.

The $N_2SA$ of the silica is a value measured by the BET method according to ASTM D3037-93.

As the silica, for example, products of Degussa, Rhodia, Tosoh Silica Corporation, Solvay Japan, Ltd., Tokuyama Corporation, etc., can be used.

In the case where silica is contained, the amount of the silica per 100 parts by mass of the rubber component is preferably not less than 5 parts by mass and more preferably not less than 30 parts by mass, and is preferably not greater than 200 parts by mass, more preferably not greater than 150 parts by mass, and further preferably not greater than 130 parts by mass. Accordingly, the advantageous effects of the present invention are more suitably obtained.

«Metal Filler»

In the present invention, a metal filler may be used as the filler. Examples of the metal filler include aluminium, magnesium, and zirconium, and oxides, hydroxides, and nitrides thereof. One of these fillers may be used individually, or two or more of these fillers may be used in combination. Among them, for the reason that excellent dispersibility in the rubber composition is achieved and good reinforcement and good thermal conductivity are achieved, aluminium is preferable, and aluminum hydroxide is more preferable. Aluminum hydroxide has the feature that the particle diameter distribution thereof is narrow and thus the maximum particle diameter is easily managed. In addition, aluminum hydroxide is also lightweight, is abundant in resource amount, and is easily processed as compared to the other metal fillers. Furthermore, aluminum hydroxide also has an excellent thermal conductivity improving effect. Moreover, aluminum hydroxide has the characteristic of absorbing heat at about 220°C and is also used as a flame retardant, and thus can reduce the risk of ignition.

As the metal filler (aluminum hydroxide), for example, products of Sumitomo Chemical Co., Ltd., Nabaltec AG, etc., can be used.

In the case where the metal filler is contained, the amount of the metal filler per 100 parts by mass of the rubber component is preferably is not less than 3 parts by mass and more preferably not less than 5 parts by mass, and is preferably not greater than 100 parts by mass, more preferably not greater than 60 parts by mass, and further preferably not greater than 50 parts by mass. Accordingly, the advantageous effects of the present invention are more suitably obtained.

<Rubber Component>

A usable rubber component is not particularly limited as long as it is a rubber component that is used for a vulcanization bladder and a tire, and examples of such a rubber component include: diene rubbers such as isoprene rubber (IR), epoxidized isoprene rubber, hydrogenated isoprene rubber, grafted isoprene rubber, natural rubber (NR), deproteinized natural rubber (DPNR), ultra pure natural rubber (UPNR), epoxidized natural rubber (ENR), hydrogenated natural rubber (HNR), grafted natural rubber, styrene-butadiene rubber (SBR), butadiene rubber (BR), styrene-isoprene-butadiene rubber (SIBR), chloroprene rubber (CR), acrylonitrile-butadiene rubber (NBR); and non-diene rubbers such as ethylene-propylene-diene rubber (EPDM), isobutylene-isoprene rubber (IIR), halogenated isobutylene-isoprene rubber (X-IIR), fluorocarbon rubber, and silicone rubber. These rubbers may be used individually, or two or more thereof may be used in combination.

In the case of a vulcanization bladder rubber composition or an inner liner rubber composition, a butyl-based rubber (isobutylene-isoprene rubber (IIR), halogenated isobutylene-isoprene rubber (X-IIR)) is preferably used as the rubber component for the reason that a good gas barrier property is achieved. In the case of a bead filler rubber composition, NR, BR, and SBR are preferable for the reason that better durability is achieved.

The butyl-based rubber is a copolymer containing an isobutylene unit (constitutional unit based on isobutylene), and may contain another repeat unit in addition to the isobutylene unit. Examples of the other repeat unit include an isoprene unit and an aromatic vinyl compound unit. For the reason that good durability and efficiency of vulcanization production are achieved, the butyl-based rubber is preferably a copolymer having an isobutylene unit and an isoprene unit and/or an aromatic vinyl compound unit, and is more preferably a copolymer having an isobutylene unit and an isoprene unit or a copolymer having an isobutylene unit and an aromatic vinyl compound unit.

Examples of the aromatic vinyl compound unit contained in the butyl-based rubber include a styrene unit, a p-methylstyrene unit, an o-methylstyrene unit, and an m-methylstyrene unit. For the reason that the vulcanization speed can be high and thus vulcanization can be completed at low temperature in a short time, a p-methylstyrene unit is preferable.

In addition, the aromatic vinyl compound unit may have a halogen introduced thereto, and the halogen is preferably bromine.

As the butyl-based rubber, for example, products of Exxon Mobil Corporation, JSR Corporation, Japan Butyl Co., Ltd., etc., can be used.

In the case of a vulcanization bladder rubber composition or an inner liner rubber composition, the amount of the butyl-based rubber in 100% by mass of the rubber component is preferably not less than 40% by mass, more preferably not less than 80% by mass, and further preferably not less than 90% by mass from the viewpoint of ensuring a gas barrier property and durability, and is preferably 100% by mass if a desired crosslinking density, that is, hardness or M300 can be ensured.

The NR is not particularly limited, and NRs that are generally used in the tire industry, such as SIR20, RSS#3, and TSR20, can be used.

In the case where the NR is contained, the amount of the NR in 100% by mass of the rubber component is preferably not less than 5% by mass, more preferably not less than 10% by mass, and further preferably not less than 30% by mass. The amount is preferably not greater than 80% by mass, more preferably not greater than 70% by mass, and further preferably not greater than 60% by mass. Accordingly, the advantageous effects of the present invention are more suitably obtained.

The BR is not particularly limited, and BRs that are generally used in the tire industry, such as BR having a high cis content, BR containing 1,2-syndiotactic polybutadiene crystal (SPB), butadiene rubber synthesized by using a rare earth catalyst (rare earth BR), can be used. In addition, tin-modified butadiene rubber (tin-modified BR) modified with a tin compound can also be used. These BRs may be used individually, or two or more thereof may be used in combination. In the present specification, the cis content (cis-1,4 bond content) of the BR can be measured by infrared absorption spectrometry.

The BR may be unmodified BR or may be modified BR.

The modified BR only needs to be BR having a functional group that interacts with the filler such as silica, and examples of the modified BR include end-modified BR obtained by modifying at least one end of BR with a compound (modifier) having a functional group described below (end-modified BR having a functional group described below at an end thereof), main chain-modified BR having a functional group described below in the main chain thereof, main chain/end-modified BR having a functional group described below in the main chain and at an end thereof (for example, main chain/end-modified BR that has a functional group described below in the main chain thereof and in which at least one end thereof is modified with a compound (modifier) having a functional group described below), and end-modified BR that is modified (coupled) by using a multifunctional compound having two or more epoxy groups in the molecule thereof and to which a hydroxyl group or an epoxy group is introduced.

Examples of the above functional groups include an amino group (preferably, an amino group obtained by substituting a hydrogen atom of an amino group with an alkyl group having 1 to 6 carbon atoms), an amide group, a silyl group, an alkoxysilyl group (preferably, an alkoxysilyl group having 1 to 6 carbon atoms), an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group (preferably, an alkoxy group having 1 to 6 carbon atoms), a hydroxyl group, an oxy group, and an epoxy group. These functional groups may have a substituent.

As the BR, for example, products of Ube Industries, Ltd., JSR Corporation, Asahi Kasei Corporation, Zeon Corporation, LANXESS, etc., can be used.

In the case where the BR is contained, the amount of the BR in 100% by mass of the rubber component is preferably not less than 5% by mass, more preferably not less than 10% by mass, and further preferably not less than 20% by mass. The amount is preferably not greater than 80% by mass, more preferably not greater than 60% by mass, and further preferably not greater than 50% by mass. Accordingly, the advantageous effects of the present invention are more suitably obtained.

The SBR is not particularly limited, and SBRs that are generally used in the tire industry, such as emulsion-polymerized SBR (E-SBR) and solution-polymerized SBR (S-SBR), can be used. These SBRs can be used individually, or two or more thereof may be used in combination.

In addition, the SBR may be unmodified SBR or may be modified SBR. Examples of the modified SBR include modified SBRs to which a functional group that is the same as in the above modified BR is introduced.

As the SBR, oil-extended SBR can be used, or non-oil-extended SBR can also be used. In the case where the oil-extended SBR is used, the oil extension amount of the SBR, that is, the amount of the extended oil contained in the SBR, is preferably 10 to 50 parts by mass per 100 parts by mass of the rubber solid content of the SBR for the reason that the advantageous effects of the present invention are more suitably obtained.

The styrene content of the SBR is preferably not less than 5% by weight, more preferably not less than 10% by weight, and further preferably not less than 15% by weight. The styrene content is preferably not greater than 60% by weight, more preferably not greater than 50% by weight, further preferably not greater than 45% by weight, and particularly preferably not greater than 40% by weight. When the styrene content is within the above range, the advantageous effects of the present invention are more suitably obtained.

In the present specification, the styrene content of the SBR is calculated by $H^1$-NMR measurement.

As the SBR, for example, SBRs manufactured by and available from Sumitomo Chemical Co., Ltd., JSR Corporation, Asahi Kasei Corporation, Zeon Corporation, etc., can be used.

In the case where the SBR is contained, the amount of the SBR in 100% by mass of the rubber component is preferably not less than 5% by mass, more preferably not less than 10% by mass, and further preferably not less than 15% by mass. The amount is preferably not greater than 80% by mass, more preferably not greater than 50% by mass, and further preferably not greater than 40% by mass. Accordingly, the advantageous effects of the present invention are more suitably obtained.

<Resin>

The rubber composition of the present invention preferably contains a resin. Accordingly, the advantageous effects of the present invention are more suitably obtained.

In the present invention, the resin means a macromolecular compound, more specifically, a polymer obtained by polymerizing a monomer unit, and may be in the solid form or may be in the liquid form.

The resin is not particularly limited as long as it is a resin that is generally used in the tire industry. Examples of the resin include polyalkylene resins, coumarone-indene resins, $\alpha$-methylstyrene-based resins, terpene-based resins, acrylic-based resins, C5 resins, and C9 resins. These resins may be used individually, or two or more thereof may be used in combination. Among them, polyalkylene resins and terpene-based resins are preferable for the reason that the rubber is plasticized, dispersion of the filler can be promoted, and the advantageous effects of the present invention are more suitably obtained.

The polyalkylene resins are not particularly limited as long as the polyalkylene resins are resins having a unit derived from alkylene. Examples of the polyalkylene resins include polyethylene resin, polypropylene resin, polybutylene resin, ethylene propylene resin, ethylene propylene styrene resin, ethylene styrene resin, and propylene styrene resin. Among them, ethylene propylene resin and ethylene propylene styrene resin are preferable.

The terpene-based resins are not particularly limited as long as the terpene-based resins are resins having a unit derived from a terpene compound. Examples of the terpene-based resins include polyterpenes (resins obtained by polymerizing a terpene compound), aromatic terpene resins (resins obtained by copolymerizing a terpene compound and an aromatic compound), and aromatic modified terpene resins (resins obtained by modifying a terpene resin with an aromatic compound).

The above terpene compounds are hydrocarbons represented by a composition of $(C_5H_8)_n$ and oxygenated derivatives thereof, and are compounds having, as a basic backbone, a terpene classified into monoterpene $(C_{10}H_{16})$, sesquiterpene $(C_{15}H_{24})$, diterpene $(C_{20}H_{32})$, and the like. Examples of the terpene compounds include $\alpha$-pinene, $\beta$-pinene, dipentene, limonene, myrcene, allo-ocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol. Other examples of the terpene compounds include resin acids (rosin acids) such as abietic acid, neoabietic acid, palustric acid, levopimaric acid, pimaric acid, and isopimaric acid. That is, the terpene-based resins also include rosin-based resins containing, as a main component, a rosin acid obtained by processing turpentine. Examples of the rosin-based resins include not only naturally occurring rosin resins (polymerized rosin) such as gum rosin, wood rosin, and tall oil rosin, but also modified rosin resins such as maleic acid-modified rosin resin and rosin-modified phenolic resin, rosin esters such as rosin glycerin ester, and disproportionated rosin resins obtained by proportionating rosin resins.

The above aromatic compounds are not particularly limited as long as the aromatic compounds are compounds having an aromatic ring. Examples of the aromatic compounds include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; and styrene derivatives such as styrene, alkylstyrenes, alkoxystyrenes, and unsaturated hydrocarbon group-containing styrenes. Among them, styrene is preferable.

The softening point of the resin is preferably not lower than 0°C, more preferably not lower than 10°C, and further preferably not lower than 40°C. The softening point is preferably not higher than 160°C, more preferably not higher than 140°C, and further preferably not higher than 100°C. When the softening point is within the above range, the advantageous effects of the present invention are more suitably obtained.

In the present invention, the softening point of the resin is a softening point that is measured with a ring and ball softening point measuring device according to JIS K 6220-1: 2001 and that is a temperature at which a ball has descended.

The resin may be hydrogenated, and is preferably a hydrogenated resin obtained by hydrogenation, for the reason that the advantageous effects of the present invention are more suitably obtained. The hydrogenation can be carried out by a known method, and, for example, any of catalytic hydrogenation with a metal catalyst, a method using hydrazine, and the like can be suitably used (see Japanese Laid-Open Patent Publication No. 59-161415, etc.). For example, the catalytic hydrogenation with the metal catalyst can be carried out by adding hydrogen in the presence of the metal catalyst in an organic solvent with pressure applied, and any of tetrahydrofuran, methanol, ethanol, and the like can be suitably used as the organic solvent. One of these organic solvents can be used individually, or two or more of these organic solvents can be mixed and used. In addition, as the metal catalyst, for example, any of palladium, platinum, rhodium, ruthenium, nickel, and the like can be suitably used. One of these metal catalysts can be used individually, or two or more of these metal catalysts can be mixed and used. The pressure applied is preferably, for example, 1 to 300 kgf/cm$^2$.

The hydrogenation rate of double bonds in the resin is 1 to 100%, and, especially, is preferably not less than 2%, more preferably not less than 5%, and further preferably not less than 8%. In addition, regarding the upper limit of the hydrogenation rate of double bonds, there is a possibility that the preferable range of the hydrogenation rate may be changed depending on pressurizing/heating conditions in a hydrogenation reaction, an advancement of production technology for catalysts and the like, improvement of productivity, and the like, and thus the preferable range of the hydrogenation rate has not been accurately confirmed at the present moment. However, under present circumstances, the hydrogenation rate is, for example, preferably not greater than 80%, more preferably not greater than 60%, further preferably not greater than 40%, much more preferably not greater than 30%, and particularly preferably not greater than 25%.

The hydrogenation rate is a value that is calculated by the following equation from respective integral values of double bond-derived peaks obtained by $^1$H-NMR (proton NMR).

In the present specification, the hydrogenation rate means the hydrogenation rate of double bonds.

$$\text{(Hydrogenation rate [\%])} = \{(A\text{-}B)/A\} \times 100$$

A: integral value of peaks of double bonds before hydrogenation
B: integral value of peaks of double bonds after hydrogenation

As the resin, for example, products of Mitsui Chemicals, Inc., Struktol Company of America, Yasuhara Chemical Co., Ltd., Arizona Chemical Company, NITTO CHEMICAL CO., LTD., Rutgers Chemicals AG, Arakawa Chemical Industries, Ltd., Maruzen Petrochemical Co., Ltd., Sumitomo Bakelite Co., Ltd., Tosoh Corporation, NIPPON SHOKUBAI CO., LTD., JXTG Nippon Oil & Energy Corporation, TOAGOSEI CO., LTD., etc., can be used.

In the case where the resin is contained, the amount of the resin per 100 parts by mass of the rubber component is preferably not less than 1 part by mass, more preferably not less than 3 parts by mass, and further preferably not less than 5 parts by mass. The amount is preferably not greater than 50 parts by mass, more preferably not greater than 30 parts by mass, and further preferably not greater than 15 parts by mass. Accordingly, the advantageous effects of the present invention are more suitably obtained.

<Other blending ingredients>

In addition to the above components, the rubber composition of the present invention can contain blending ingredients that are generally used for production of a vulcanization bladder rubber composition and a tire rubber composition, for example, a silane coupling agent, zinc oxide, stearic acid, a plasticizer such as oil, a crosslinking agent, a vulcanization accelerator, an antioxidant, a mold lubricant, and the like, as necessary.

As the vulcanization bladder oil, castor oil, which is hard to volatilize, is preferably used. Accordingly, minute voids between a polymer (rubber component) and carbon black become small, the rubber viscosity is reduced, and a better thermal conductivity and better durability are achieved. In addition, in the case of using the rubber composition as a vulcanization bladder rubber composition, the rubber fluidity during molding vulcanization improves, a minor defective rate can be reduced, and better efficiency of vulcanization production is achieved.

As the plasticizer (oil), for example, products of Itoh Oil Chemicals Co., Ltd., Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., and FUJI KOSAN COMPANY, LTD., Lucant manufactured by Mitsui Chemicals, Inc., etc., can be used.

In the case where the plasticizer (oil) is contained, the amount of the plasticizer (oil) per 100 parts by mass of the rubber component is preferably not less than 1 part by mass and more preferably not less than 3 parts by mass, and is preferably not greater than 20 parts by mass and more preferably not greater than 12 parts by mass. Accordingly, the advantageous effects of the present invention are more suitably obtained.

In the case of using the rubber composition as a vulcanization bladder rubber composition, a mold lubricant is preferably contained. As the mold lubricant, a mixture of a fatty acid metal salt and a fatty acid amide that can provide moderate slidability between the rubber component and a kneading machine is preferably used. Accordingly, minute voids during molding vulcanization or after molding vulcanization are reduced, and better durability and a better thermal conductivity (efficiency of vulcanization production) are achieved.

Examples of the metal forming the fatty acid metal salt include potassium, sodium, magnesium, calcium, barium, zinc, nickel, and molybdenum. One of these metals may be used individually, or two or more of these metals may be used in combination. Among them, alkaline earth metals such as calcium and zinc are preferable, and calcium is more preferable.

The fatty acid forming the fatty acid metal salt may be a saturated fatty acid or may be an unsaturated fatty acid. Examples of the saturated fatty acid include decanoic acid, dodecanoic acid, and stearic acid, and examples of the unsaturated fatty acid include oleic acid and elaidic acid. One of these fatty acids may be used individually, or two or more of these fatty acids may be used in combination. Among them, the saturated fatty acid is preferable, and stearic acid is more preferable.

The fatty acid amide may be a saturated fatty acid amide or may be an unsaturated fatty acid amide. Examples of the saturated fatty acid amide include stearic acid amide and behenic acid amide, and examples of the unsaturated fatty acid amide include oleic acid amide and erucic acid amide. One of these fatty acid amides may be used individually, or two or more of these fatty acid amides may be used in combination. Among them, the unsaturated fatty acid amide is preferable, and oleic acid amide is more preferable.

As the mold lubricant, for example, products of NOF Corporation, Struktol Company of America, etc., can be used.

In the case where the mold lubricant is contained, the amount of the mold lubricant per 100 parts by mass of the rubber component is preferably not less than 0.5 parts by mass and more preferably not less than 1 part by mass, and is preferably not greater than 5 parts by mass and more preferably not greater than 3 parts by mass. Accordingly, the advantageous effects of the present invention are more suitably obtained.

Examples of the crosslinking agent include sulfur and a crosslinked resin. One of these crosslinking agents may be used individually, or two or more of these crosslinking agents may be used in combination. Among them, a crosslinked resin is preferable in the case where a butyl-based rubber is used as the rubber component, for the reason that the butyl-based rubber can be efficiently crosslinked. Meanwhile, sulfur is preferable in the case where a diene rubber is used as the rubber component.

Examples of the crosslinked resin include resorcinol resin, phenolic resin, alkylphenol resins, and alkylphenol formaldehyde resins. One of these crosslinked resins may be used individually, or two or more of these crosslinked resins may be used in combination. Among them, alkylphenol formaldehyde resins are preferably used.

As the crosslinked resin, for example, products of Taoka Chemical Co., Ltd., Arkema Inc., etc., can be used.

Examples of the sulfur include powdery sulfur, precipitated sulfur, colloidal sulfur, insoluble sulfur, highly dispersible sulfur, and soluble sulfur, which are generally used in the rubber industry. One of these sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The amount of the crosslinking agent per 100 parts by mass of the rubber component is preferably not less than 0.5 parts by mass, more preferably not less than 1 part by mass, and further preferably not less than 2 parts by mass, and is preferably not greater than 10 parts by mass and more preferably not greater than 5 parts by mass. Accordingly, the advantageous effects of the present invention are more suitably obtained.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more thereof may be used in combination.

In the case where the vulcanization accelerator is contained, the amount of the vulcanization accelerator per 100 parts by mass of the rubber component is preferably not less than 0.5 parts by mass and more preferably not less than 1 part by mass. The amount is preferably not greater than 10 parts by mass and more preferably not greater than 3 parts by mass. Accordingly, the advantageous effects of the present invention are more suitably obtained.

As stearic acid, a conventionally known one can be used, and, for example, products of NOF Corporation, Kao Corporation, Wako Pure Chemical Industries, Ltd., New Japan Chemical Co., Ltd., etc., can be used.

In the case where stearic acid is contained, the amount of stearic acid per 100 parts by mass of the rubber component is preferably not less than 0.2 parts by mass and more preferably not less than 0.5 parts by mass. The amount is preferably not greater than 10 parts by mass and more preferably not greater than 5 parts by mass. Accordingly, the advantageous effects of the present invention are more suitably obtained.

As zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

In the case where zinc oxide is contained, the amount of zinc oxide per 100 parts by mass of the rubber component is preferably not less than 0.5 parts by mass and more preferably not less than 1 part by mass. The amount is preferably not greater than 5 parts by mass and more preferably not greater than 4 parts by mass. Accordingly, the advantageous effects of the present invention are more suitably obtained.

<Rubber Composition>

The rubber composition of the present invention is produced by a general method. That is, the rubber composition of the present invention can be produced by, for example, a method in which the above components are kneaded with a Banbury mixer, a kneader, an open roll, or the like and then crosslinking (vulcanization) is conducted.

The rubber composition of the present invention has a thermal conductivity of not less than 0.45 W/m·K, preferably not less than 0.50 W/m·K, more preferably not less than 0.60 W/m·K, and further preferably not less than 0.70 W/m·K. This means that the rubber composition of the present invention has good thermal conductivity. Accordingly, in the case where the rubber composition of the present invention is used as a vulcanization bladder rubber composition, good efficiency of vulcanization production can be ensured. The upper limit of the thermal conductivity is not particularly limited, but the thermal conductivity is normally not greater than 1.0 W/m·K.

The thermal conductivity is the thermal conductivity of the vulcanized rubber composition at 23°C, and is measured according to the hot wire method specified in JIS R 2616. The thermal conductivity can be adjusted mainly on the basis of the type and amount of the filler included. In particular, the thermal conductivity can be increased by including the graphite specified in the present application.

The rubber composition of the present invention can be used in all applications in which good thermal conductivity is required. The rubber composition of the present invention can be used for, for example, a tire, a vulcanization bladder, a gasket, a blade, a packing, and the like. Among them, the rubber composition of the present invention can be suitably used as a tire rubber composition for producing a tire and an accessory member rubber composition for producing a tire, that is, a vulcanization bladder rubber composition for producing a vulcanization bladder.

When the rubber composition of the present invention is used as a tire rubber composition, the rubber composition can be suitably used as a tread rubber composition, a sidewall rubber composition, an inner liner rubber composition, a bead filler rubber composition, a side reinforcing layer (insert) rubber composition, etc. Among them, the rubber composition of the present invention can be more suitably used as a sidewall rubber composition, a bead filler rubber composition, a side reinforcing layer rubber composition, and an inner liner rubber composition, which are required to achieve a particularly high thermal conductivity, and can be further suitably be used as an inner liner rubber composition, a side reinforcing layer rubber composition, and a bead filler rubber composition.

<Vulcanization Bladder>

The vulcanization bladder of the present invention is produced by a general method. That is, the vulcanization bladder of the present invention can be produced by a method in which the above components are kneaded with a Banbury mixer, a kneader, an open roll, or the like, the obtained unvulcanized rubber composition is formed into the shape of a vulcanization bladder, and then crosslinking (vulcanization) is conducted, for example.

The vulcanization bladder of the present invention can be suitably used as a vulcanization bladder at the time of tire production.

<Pneumatic Tire>

The pneumatic tire of the present invention includes a tire member produced by using the rubber composition of the present invention, and is produced by a general method. That is, the above components are kneaded with a Banbury mixer, a kneader, an open roll, or the like, the obtained unvulcanized rubber composition is extruded in an unvulcanized state so as to correspond to the shape of a tire member, is formed on a tire forming machine by a general method, and is attached together with other tire members, whereby an unvulcanized tire can be formed. The unvulcanized tire is heated and pressurized in a vulcanizing machine, whereby a tire can be produced.

The tire member is preferably an inner liner, a side reinforcing layer (insert), or a bead filler among the above tire members.

The pneumatic tire of the present invention can be suitably used as commercially available tires such as tires for passenger cars, tires for large passenger cars, tires for large SUVs, heavy-duty tires for trucks and buses, and tires for light trucks, tires for motorcycles, and run-flat tires.

EXAMPLES

The present invention will be specifically described by means of examples, but the present invention is not limited to these examples.

<Rubber Component>

Butyl-based rubber: Exxpro 3035 manufactured by Exxon Mobil Chemical Company (a copolymer having an isobutylene unit and a p-methylstyrene unit to which bromine is introduced)

<Normal Carbon Black>

N330: Show Black N330 manufactured by Cabot Japan K.K. ($N_2SA$: 79 $m^2$/g, DBP absorption: 102 $cm^3$/100 g, bulk density (untamped): 0.37 $g/cm^3$)
N220: Show Black N220 manufactured by Cabot Japan K.K. ($N_2SA$: 115 $m^2$/g, DBP absorption: 115 $cm^3$/100 g, bulk density (untamped): 0.35 $g/cm^3$)

<Graphite>

Graphite 1: artificial graphite C-Thermo 011 manufactured by Imerys ($N_2SA$: 25 $m^2$/g, bulk density (untamped): 0.15 $g/cm^3$)
Graphite 2: artificial graphite C-Thermo 012 manufactured by Imerys ($N_2SA$: 25 $m^2$/g, bulk density (untamped): 0.04 $g/cm^3$)
Graphite 3: artificial graphite KS44 manufactured by Imerys ($N_2SA$: 9 $m^2$/g, bulk density (untamped): 0.19 $g/cm^3$)

<Conductive Carbon>

Conductive carbon 1: Ensaco 260G manufactured by Imerys ($N_2SA$: 70 $m^2$/g, bulk density (untamped): 0.17 $g/cm^3$)
Conductive carbon 2: Ketchen black EC300J manufactured by Lion Corporation ($N_2SA$: 800 $m^2$/g)
Conductive carbon 3: Denka Black manufactured by Denka Company Limited (acetylene black, $N_2SA$: 92 $m^2$/g, bulk density (untamped): 0.25 $g/cm^3$, DBP absorption: 160 $cm^3$/100 g)

<Zinc Oxide>

Zinc oxide: two types of zinc oxide manufactured by Mitsui Mining & Smelting Co., Ltd.

<Stearic Acid>

Stearic acid: Tsubaki manufactured by NOF Corporation

<Plasticizer>

Castor oil: castor oil manufactured by Itoh Oil Chemicals Co., Ltd.
Ethylene propylene copolymer oligomer: Lucant manufactured by Mitsui Chemicals, Inc. (Tg: -77°C, liquid at normal temperature)

<Compatibilizer>

Ethylene propylene styrene copolymer resin: 40MS manufactured by Struktol Company of America (softening point: 78°C)
Polyterpene resin: P85 manufactured by Yasuhara Chemical Co., Ltd. (softening point: 85°C)

<Crosslinking Agent>

Vulcanization accelerator: Nocceler DM manufactured by Ouchi Shinko Chemical Industrial Co., Ltd. (di-2-benzothiazolyl disulfide)
Crosslinking agent (crosslinked resin): TACKIROL 201 manufactured by Taoka Chemical Co., Ltd. (alkylphenol formaldehyde resin)

<Mold Lubricant>

Mold lubricant: WB16 manufactured by Struktol Company of America (mixture of fatty acid calcium and fatty acid amide)

(Examples and Comparative Examples)

In accordance with a blending formula shown in Table 1, the chemicals other than the crosslinking agent and the vulcanization accelerator, among the blending materials, were kneaded with a 2.0-L Banbury mixer at a discharge temperature of 150°C for 4 minutes to obtain a kneaded product. Next, the crosslinking agent and the vulcanization accelerator were added to the obtained kneaded product, and the mixture was kneaded with a 2.0-L Banbury mixer at a discharge temperature of 95°C for 3 minutes to obtain an unvulcanized rubber composition. The obtained unvulcanized rubber composition was rolled into a 2 mm-thick sheet with a roll, and was press-vulcanized to obtain a vulcanized rubber composition. In addition, the unvulcanized rubber composition was extruded into a rectangular parallelepiped, and was pressurized and heated to be vulcanized by a vulcanization bladder mold, thereby obtaining a vulcanization bladder for a passenger car tire (tire size: 195/65R15).
The vulcanization conditions were set at 180°C and 12 minutes.
The obtained vulcanized rubber composition and vulcanization bladder were evaluated as described below.

(Thermal Conductivity)

The thermal conductivity at 23°C (W/m·K) of each vulcanized rubber composition was measured with a quick thermal conductivity meter (Kemtherm QTM-500 manufactured by Kyoto Electronics Manufacturing Co., Ltd.) according to the hot wire method specified in JIS R 2616. A higher thermal conductivity indicates that the efficiency of vulcanization production is better.

(Minor Defect Rate)

Visual appearance inspection was performed on each vulcanization bladder, a vulcanization bladder in which blistering (foaming), bare (keloid), unevenness of a gauge, or an excessive recess occurred was considered as a minor defect, and a rate of occurrence of minor defects (minor defect rate) was calculated. The results are indicated as indexes with the result of Comparative Example 1 being 100. A higher index indicates that the minor defect rate is low. An index of 110 or higher is good.

(EB, M300)

Elongation at break at 150°C (unused condition EB) and stress at 300% elongation at 150°C (unused condition M300) were measured according to JIS K6251 by using a No. 3 dumbbell type test piece formed from each vulcanized rubber composition.

In addition, elongation at break at 150°C (degraded condition EB) was measured according to JIS K6251 by using a No. 3 dumbbell type test piece formed from each vulcanized rubber composition that had been degraded by being left in an air oven at 180°C for 24 hours. Higher EB and higher M300 each indicate that the durability is better. When unused condition EB is not less than 450%, or when unused condition M300 is not less than 3.0 MPa, crack growth is hard to occur, and the durability is good.

[Table 1]

Vulcanization bladder rubber composition

| Blending amount (parts by mass) | | | Ex. | Comp. Ex. | Comp. Ex. | Comp. Ex. | Comp. Ex. | Comp. Ex. | Comp. Ex. | Comp. Ex. | Comp. Ex. |
|---|---|---|---|---|---|---|---|---|---|---|---|
| | | | 1 | 1 | 2 | 3 | 4 | 5 | 6 | 7 | 8 |
| | Rubber component | Butyl-based rubber | 100 | 100 | 100 | 100 | 100 | 100 | 100 | 100 | 100 |
| | Normal carbon black | N330 | 25 | 25 | 25 | 25 | 25 | 25 | 25 | 25 | 20 |
| | | N220 | | | | | | | | | |
| | Graphite | Graphite 1 | 15 | | | | | | | | 25 |
| | | Graphite 2 | | | | | | 15 | | | |
| | | Graphite 3 | | | | | | | 15 | | |
| | Conductive carbon | Conductive carbon 1 | | | | | | | | 15 | |
| | | Conductive carbon 2 | | | | | | | | | 15 |
| | | Conductive carbon 3 | 27 | 27 | 27 | 42 | 27 | 27 | 27 | 27 | |
| | Filler total amount | | 67 | 52 | 52 | 67 | 67 | 67 | 67 | 67 | 45 |
| | Plasticizer | Castor oil | | 5 | | | | | | | |
| | | Ethylene propylene copolymer oligomer | 6 | | 5 | 6 | 6 | 6 | 6 | 6 | 6 |
| | Compatibilizer | Ethylene propylene styrene copolymer resin | 5 | | | 5 | 5 | 5 | 5 | 5 | 5 |
| | | Polyterpene resin | | | | | | | | | |
| | Crosslinking agent | Vulcanization accelerator | 1.4 | 1.4 | 1.4 | 1.4 | 1.4 | 1.4 | 1.4 | 1.4 | 1.4 |
| | | Crosslinked resin | 3 | 3 | 3 | 3 | 3 | 3 | 3 | 3 | 3 |
| | Crosslinking activator | Zinc oxide | 3 | 3 | 3 | 3 | 3 | 3 | 3 | 3 | 3 |
| | Processing aid | Mold lubricant | 2 | 2 | 2 | 2 | 2 | 2 | 2 | 2 | 2 |
| | | Stearic acid | 0.5 | 0.5 | 0.5 | 0.5 | 0.5 | 0.5 | 0.5 | 0.5 | 0.5 |
| | Total amount | | 254.9 | 218.9 | 218.9 | 254.9 | 254.9 | 254.9 | 254.9 | 254.9 | 210.9 |
| Evaluation results | Thermal conductivity | W/m·K | 0.75 | 0.30 | 0.30 | 0.39 | 0.69 | 0.44 | 0.35 | 0.37 | 0.41 |
| | Minor defect rate | Index | 140 | 100 | 110 | 80 | 80 | 125 | 90 | 60 | 80 |
| | Durability | Unused condition EB (%) | 550 | 630 | 640 | 430 | 510 | 440 | 420 | 320 | 510 |
| | | Unused condition M300 (MPa) | 3.7 | 3.3 | 3.4 | 3.7 | 3.6 | 3.5 | 4.4 | 4.8 | 3.8 |
| | | Degraded condition EB (%) | 350 | 260 | 360 | 260 | 320 | 270 | 230 | 145 | 410 |

[Table 1] Cont.

Vulcanization bladder rubber composition

| | | | Ex. | Ex. | Ex. | Ex. | Ex. | Ex. | Ex. | Ex. | Comp. Ex. | Ex. |
|---|---|---|---|---|---|---|---|---|---|---|---|---|
| | | | 2 | 3 | 4 | 5 | 6 | 7 | 8 | 9 | 9 | 10 |
| Blending amount (parts by mass) | Rubber component | Butyl-based rubber | 100 | 100 | 100 | 100 | 100 | 100 | 100 | 100 | 100 | 100 |
| | Normal carbon black | N330 | 25 | 15 | 25 | 25 | 25 | 25 | | 47 | 5 | 5 |
| | | N220 | | | | | | | 25 | | | |
| | Graphite | Graphite 1 | 25 | 5 | 30 | 15 | 15 | 15 | 15 | 20 | | 15 |
| | | Graphite 2 | | | | | | | | | | |
| | | Graphite 3 | | | | | | | | | | |
| | Conductive carbon | Conductive carbon 1 | | | | | | | | | | |
| | | Conductive carbon 2 | | | | | | | | | | |
| | | Conductive carbon 3 | 17 | 47 | 27 | 17 | 27 | 27 | 27 | | 47 | 47 |
| | Filler total amount | | 67 | 67 | 82 | 57 | 67 | 67 | 67 | 67 | 52 | 67 |
| | Plasticizer | Castor oil | | | | | | | | | | |
| | | Ethylene propylene copolymer oligomer | 6 | 8 | 10 | 6 | 11 | 6 | 6 | 6 | 6 | 6 |
| | Compatibilizer | Ethylene propylene styrene copolymer resin | 5 | 5 | 5 | 5 | | | 5 | 5 | 5 | 5 |
| | | Polyterpene resin | | | | | | 5 | | | | |
| | Crosslinking agent | Vulcanization accelerator | 1.4 | 1.4 | 1.4 | 1.4 | 1.4 | 1.4 | 1.4 | 1.4 | 1.4 | 1.4 |
| | | Crosslinked resin | 3 | 3 | 3 | 3 | 3 | 3 | 3 | 3 | 3 | 3 |
| | Crosslinking activator | Zinc oxide | 3 | 3 | 3 | 3 | 3 | 3 | 3 | 3 | 3 | 3 |
| | Processing aid | Mold lubricant | 2 | 2 | 2 | 2 | 2 | 2 | 2 | 2 | 2 | 2 |
| | | Stearic acid | 0.5 | 0.5 | 0.5 | 0.5 | 0.5 | 0.5 | 0.5 | 0.5 | 0.5 | 0.5 |
| | Total amount | | 254.9 | 256.9 | 288.9 | 234.9 | 254.9 | 254.9 | 254.9 | 254.9 | 224.9 | 254.9 |
| Evaluation results | Thermal conductivity | W/m·K | 0.88 | 0.52 | 0.91 | 0.50 | 0.75 | 0.75 | 0.75 | 0.61 | 0.40 | 0.82 |
| | Minor defect rate | Index | 130 | 110 | 150 | 130 | 150 | 130 | 125 | 140 | 110 | 110 |
| | Durability | Unused condition EB (%) | 560 | 450 | 460 | 650 | 510 | 570 | 520 | 550 | 470 | 450 |
| | | Unused condition M300 (MPa) | 3.6 | 3.5 | 3.0 | 4.4 | 3.5 | 3.9 | 4.0 | 4.6 | 2.8 | 3.0 |
| | | Degraded condition EB (%) | 360 | 295 | 265 | 435 | 320 | 370 | 330 | 365 | 240 | 240 |

16

From Table 1, in Examples in which 50 parts by mass or greater of a filler containing a graphite having a nitrogen adsorption specific surface area of not less than 16 m$^2$/g and a bulk density of not less than 0.10 g/cm$^3$ was contained per 100 parts by mass of the rubber component and the thermal conductivity was not less than 0.45 W/m·K, both good thermal conductivity and good durability were achieved, and the minor defect rate and the efficiency of vulcanization production were also good.

Provided are a rubber composition that can achieve both good thermal conductivity and good durability, and a vulcanization bladder and a pneumatic tire produced by using the rubber composition. The rubber composition contains 50 parts by mass or greater of a filler containing a graphite having a nitrogen adsorption specific surface area of not less than 16 m$^2$/g and a bulk density of not less than 0.10 g/cm$^3$, per 100 parts by mass of a rubber component, and has a thermal conductivity of not less than 0.45 W/m·K.

**Claims**

1. A rubber composition containing 50 parts by mass or greater of a filler containing a graphite having a nitrogen adsorption specific surface area, measured according to JIS K 6217-2:2001, of not less than 16 m$^2$/g and a bulk density, measured according to JIS H 1902, of not less than 0.10 g/cm$^3$, per 100 parts by mass of a rubber component, the rubber composition having a thermal conductivity, measured according to JIS R 2616, of not less than 0.45 W/m·K.

2. The rubber composition according to claim 1, wherein the filler is contained in an amount of 60 to 75 parts by mass per 100 parts by mass of the rubber component.

3. The rubber composition according to claim 1 or 2, wherein normal carbon black is contained as a part of the filler in an amount of not less than 10 parts by mass per 100 parts by mass of the rubber component

4. The rubber composition according to any one of claims 1 to 3, further containing a resin.

5. The rubber composition according to any one of claims 1 to 4, wherein normal carbon black is contained as a part of the filler in an amount of not less than 20 parts by mass per 100 parts by mass of the rubber component.

6. The rubber composition according to any one of claims 1 to 5, wherein the rubber composition is a vulcanization bladder rubber composition, an inner liner rubber composition, a side reinforcing layer rubber composition, or a bead filler rubber composition.

7. A vulcanization bladder produced by using the rubber composition according to any one of claims 1 to 5.

8. A pneumatic tire comprising a tire member produced by using the rubber composition according to any one of claims 1 to 5.

9. The pneumatic tire according to claim 8, wherein the tire member is an inner liner, a side-reinforcing layer, or a bead filler.

**Patentansprüche**

1. Kautschukzusammensetzung, der 50 Masseteile oder mehr eines Füllstoffs, der einen Graphit mit einer spezifischen Stickstoffadsorptionsoberfläche, gemessen gemäß JIS K 6217-2:2001, von nicht weniger als 16 m$^2$/g und einer Schüttdichte, gemessen gemäß JIS H 1902, von nicht weniger als 0,10 g/cm$^3$ enthält, pro 100 Masseteile einer Kautschukkomponente enthält, wobei die Kautschukzusammensetzung eine Wärmeleitfähigkeit, gemessen gemäß JIS R 2616, von nicht weniger als 0,45 W/m·K aufweist.

2. Kautschukzusammensetzung nach Anspruch 1, wobei der Füllstoff in einer Menge von 60 bis 75 Massenteilen pro 100 Massenteile der Kautschukkomponente enthalten ist.

3. Kautschukzusammensetzung nach Anspruch 1 oder 2, wobei normales Carbon Black als Teil des Füllstoffs in einer Menge von nicht weniger als 10 Massenteilen pro 100 Massenteile der Kautschukkomponente enthalten ist.

4. Kautschukzusammensetzung nach einem der Ansprüche 1 bis 3, die ferner ein Harz enthält.

**5.** Kautschukzusammensetzung nach einem der Ansprüche 1 bis 4, wobei normales Carbon Black als Teil des Füllstoffs in einer Menge von nicht weniger als 20 Massenteilen pro 100 Massenteile der Kautschukkomponente enthalten ist.

**6.** Kautschukzusammensetzung nach einem der Ansprüche 1 bis 5, wobei die Kautschukzusammensetzung eine Vulkanisationsblasenkautschukzusammensetzung, eine Innenauskleidungs-Kautschukzusammensetzung, eine Seitenverstärkungsschicht-Kautschukzusammensetzung oder eine Wulstfüllstoff-Kautschukzusammensetzung ist.

**7.** Vulkanisationsblase, hergestellt unter Verwendung der Kautschukzusammensetzung nach einem der Ansprüche 1 bis 5.

**8.** Luftreifen, der ein Reifenelement umfasst, das unter Verwendung der Kautschukzusammensetzung nach einem der Ansprüche 1 bis 5 hergestellt wird.

**9.** Luftreifen nach Anspruch 8, wobei das Reifenelement eine Innenauskleidung, eine Seitenverstärkungsschicht oder ein Wulstfüllstoff ist.

**Revendications**

**1.** Composition de caoutchouc contenant 50 parties en masse ou plus d'une charge contenant un graphite ayant une surface spécifique d'adsorption d'azote, mesurée conformément à la norme JIS K 6217-2:2001, non inférieure à 16 $m^2$/g et une masse volumique apparente, mesurée conformément à la norme JIS H 1902, non inférieure à 0,10 $g/cm^3$, pour 100 parties en masse de composant caoutchouc, la composition de caoutchouc ayant une conductivité thermique, mesurée conformément à la norme JIS R 2616, non inférieure à 0,45 W/m·K.

**2.** Composition de caoutchouc selon la revendication 1, dans laquelle la charge est contenue en une quantité de 60 à 75 parties en masse pour 100 parties en masse du composant caoutchouc.

**3.** Composition de caoutchouc selon la revendication 1 ou 2, dans laquelle du noir de carbone normal est contenu en tant que partie de la charge en une quantité non inférieure à 10 parties en masse pour 100 parties en masse du composant caoutchouc.

**4.** Composition de caoutchouc selon l'une quelconque des revendications 1 à 3, contenant en outre une résine.

**5.** Composition de caoutchouc selon l'une quelconque des revendications 1 à 4, dans laquelle du noir de carbone normal est contenu en tant que partie de la charge en une quantité non inférieure à 20 parties en masse pour 100 parties en masse du composant caoutchouc.

**6.** Composition de caoutchouc selon l'une quelconque des revendications 1 à 5, laquelle composition de caoutchouc est une composition de caoutchouc pour vessie de vulcanisation, une composition de caoutchouc pour calandrage intérieur, une composition de caoutchouc pour couche de renforcement latéral, ou une composition de caoutchouc pour bourrage sur tringle.

**7.** Vessie de vulcanisation produite par utilisation de la composition de caoutchouc selon l'une quelconque des revendications 1 à 5.

**8.** Pneu comprenant un élément de pneu produit par utilisation de la composition de caoutchouc selon l'une quelconque des revendications 1 à 5.

**9.** Pneu selon la revendication 8, dans lequel l'élément de pneu est un calandrage intérieur, une couche de renforcement latéral, ou un bourrage sur tringle.

Fig. 1

10μm

Fig. 2

LIGHT GRAY PORTIONS HAVE PLATE SHAPES

DARK BLACK PORTIONS HAVE THREE-DIMENSIONAL LUMP SHAPES

**EP 3 401 363 B1**

**REFERENCES CITED IN THE DESCRIPTION**

**Patent documents cited in the description**

- JP 2012224720 A

- JP 59161415 A